(19) Europäisches Patentamt
European Patent Office
Office européen des brevets

(11) **EP 2 908 605 A1**

(12) **DEMANDE DE BREVET EUROPEEN**

(43) Date de publication:
**19.08.2015 Bulletin 2015/34**

(51) Int Cl.:
***H05B 33/08*** *(2006.01)*

(21) Numéro de dépôt: **14154986.5**

(22) Date de dépôt: **13.02.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **EM Microelectronic-Marin SA 2074 Marin (CH)**

(72) Inventeurs:
• **Saby, Jérôme 2000 Neuchâtel (CH)**

• **Théoduloz, Yves 1400 Yverdon (CH)**
• **Marti, Cyril 2523 Lignières (CH)**

(74) Mandataire: **Surmely, Gérard et al ICB Ingénieurs Conseils en Brevets Faubourg de l'Hôpital 3 2001 Neuchâtel (CH)**

(54) **Dispositif électronique d'alimentation d'une diode électroluminescente**

(57) Le dispositif électronique (18), prévu pour alimenter périodiquement une diode électroluminescente (6) et destiné à être agencée entre cette diode électroluminescente et une batterie (14) formant une source d'alimentation électrique, comprend un convertisseur de tension du type élévateur (20) et une capacité de stockage d'énergie électrique (25;C), agencée en aval du convertisseur de tension de manière parallèle à la diode, une source de courant (26) et un interrupteur (28) commandé par une unité de commande (22) de ce dispositif électronique. La source de courant et l'interrupteur sont agencés en série, entre ladite capacité de stockage et une borne de tension inférieure, sur le chemin électrique prévu pour l'alimentation de la diode électroluminescente. Cette source de courant est agencée pour imposer, lorsqu'elle est activée, un courant constant correspondant au courant de fonctionnement ($I_{sup}$) prévu pour la diode.

Fig. 2

EP 2 908 605 A1

**Description**

<u>Domaine technique</u>

La présente invention concerne le domaine des dispositifs électroniques d'alimentation de diodes électroluminescentes avec une batterie comme source d'énergie électrique. En particulier, l'invention concerne le cas où la batterie est de petites dimensions et de faible coût, par exemple une petite batterie de faible épaisseur qui est généralement prévue pour délivrer un faible courant instantané.

<u>Arrière-plan technologique</u>

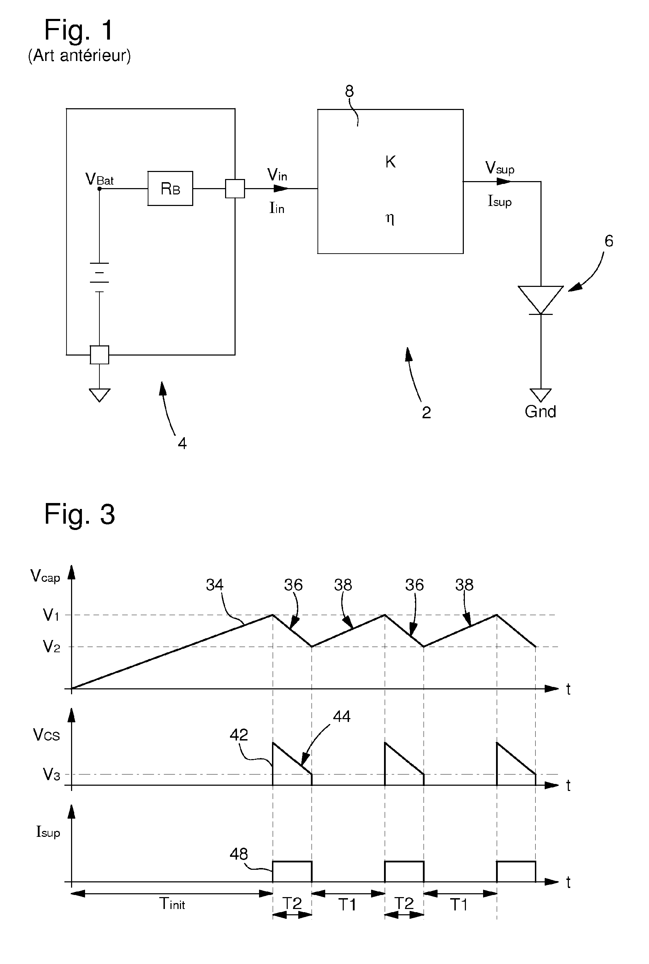

A la Figure 1 est représenté schématiquement un dispositif électronique de l'art antérieur pour alimenter une diode électroluminescente, nommée aussi LED ci-après. Ce système électronique 2 comprend une batterie 4 et une diode électroluminescente 6. La batterie 4 a une tension à vide $V_{Bat}$ et une résistance interne $R_B$ relativement élevée. En particulier, pour un courant d'alimentation $I_{in}$ sensiblement égal à un courant de fonctionnement donné de la LED 6, la batterie prévue délivre une tension d'alimentation $V_{in}$ entre ses bornes extérieures qui est inférieure à la tension de fonctionnement correspondante de cette LED. Ainsi, le système électronique comprend en outre un dispositif électronique formé d'un convertisseur de tension du type élévateur 8 (en anglais 'boost converter') agencé entre une borne extérieure de la batterie et la LED 6. Ce convertisseur de tension a un coefficient multiplicateur K en régime établi et un rendement $\eta$. Le convertisseur est agencé pour élever la tension $V_{sup}$ fournie à la LED de manière que cette tension soit au moins égale à la tension de fonctionnement de la LED. Etant donné que la puissance fournie par le convertisseur à la LED est égale à $P_{sup} = \eta \cdot P_{in} = n \cdot V_{in} \cdot I_{in}$, le courant fourni à la LED est égal à $I_{sup} = \eta \cdot I_{in}/K$.

Dans une première variante, le système électronique 2 est prévu avec une alimentation continue de la LED. Dans une deuxième variante, il est prévu une alimentation périodique de la LED. Ce dernier cas est souvent implémenté car il permet de diminuer la consommation électrique et le signal lumineux périodique donne une information visuelle suffisante, voir meilleure.

Pour que le système électronique 2 soit fonctionnel, la batterie doit être choisie de manière à permettre d'alimenter en direct le dispositif électronique 8 et la LED. Ainsi, cette batterie doit présenter une résistance interne limitée. En effet, pour que le système électronique 2 fonctionne, il faut qu'il existe premièrement un $V_{in}$, supérieur ou égal à la tension minimum $V_{LED}^{min}$ de la LED divisée par le coefficient multiplicateur K ($V_{in} >= V_{LED}^{min}/K$), pour lequel la puissance de la batterie $P_{Bat}(V_{in})$ est supérieure ou égale à la puissance minimum $P_{LED}^{min}$ de fonctionnement de la LED multipliée par le rendement $\eta$ du dispositif électronique 8, soit $P_{Bat}(V_{in}) >= \eta \cdot P_{LED}^{min}$. De plus, il faut que la tension $V_{in}$ qui satisfait cette première condition soit supérieure ou égale à la tension minimum de fonctionnement $V_{in}^{min}$ du dispositif électronique 8 qui comprend le convertisseur de tension et son unité électronique de commande.

On peut déduire des considérations précédentes quant aux conditions de fonctionnement du système électronique 2 une valeur maximum pour la résistance interne $R_B$ au-delà de laquelle il n'est théoriquement pas possible que ce système électronique soit fonctionnel. Puisque la puissance maximale $P_{in}^{max}$ que peut fournir la batterie est donnée par la relation $P_{in}^{max} = V_{Bat}^2/4R_B$, le système électronique n'est pas fonctionnel si la résistance interne $R_B > (\eta/4) \cdot (V_{Bat})^2/P_{LED}^{min}$. D'autre part, si la tension $V_{in}^{min}$ est supérieure à la moitié de la tension $V_{Bat}$, ce système n'est plus fonctionnel déjà dès que $R_B > \eta \cdot (V_{Bat}-V_{in}^{min}) \cdot V_{in}^{min}/P_{LED}^{min}$. Considérons un exemple pour une application particulière : La LED nécessite pour fonctionner correctement une tension $V_{LED} = V_{sup} = 3.0$ V et un courant électrique $I_{LED} = I_{sup} = 1.0$ mA, la batterie sélectionnée a une tension à vide $V_{Bat} = 1.5$ V et le convertisseur de tension est un tripleur de tension avec une tension minimum de fonctionnement $V_{in}^{min} = 0.9$ V et un rendement de 80%. Pour que cette application puisse être fonctionnelle, il faut donc que la résistance interne $R_B$ soit inférieure ou égale à $R_B^{max} = 144$ $\Omega$. Si on régule à $V_{in} = 1.0$ V et si $R_B = 125$ $\Omega$, on obtient sans autres pertes un courant d'alimentation $I_{sup}$ d'environ 1.07 mA; ce qui convient à l'application en mode continu ou en mode périodique. Par contre, si pour cette tension régulée on a une résistance $R_B = 140$ $\Omega$, le courant $I_{sup}$ vaut environ 0.95 mA; ce qui est inférieur à 1.0 mA souhaité.

Les petites batteries bon marché sont généralement caractérisées par une résistance interne relativement grande, par exemple entre 200 $\Omega$ et 400 $\Omega$. En effet, en principe, la diminution de la résistance interne engendre une augmentation du coût et/ou de l'encombrement de la batterie. De plus, certaines technologies commercialement intéressantes ne sont pas possibles à moindre coût si la résistance interne de la batterie doit être limitée, par exemple pour des batteries plates et flexibles. Il existe donc un besoin pour un dispositif électronique d'alimentation d'une LED qui puisse avoir comme source d'énergie une batterie avec une résistance interne relativement élevée, en particulier supérieure à la valeur maximale théorique donnée ci-avant.

<u>Résumé de l'invention</u>

La présente invention a pour but de trouver une solution au problème susmentionné, de manière à pouvoir alimenter correctement une diode électroluminescente avec une batterie dont la résistance interne est élevée.

A cet effet, la présente invention a pour objet un dispositif électronique pour alimenter une LED tel que défini à la revendication 1.

Grâce aux caractéristiques de la présente invention, il est possible d'alimenter périodiquement une LED notamment avec une puissance supérieure à la puissance maximale que peut fournir la batterie sélectionnée, tout en contrôlant le courant électrique qui traverse la LED de manière à optimiser le dimensionnement des divers éléments électroniques et la consommation d'énergie électrique. La capacité de stockage permet de découpler la puissance électrique fournie par la batterie et la puissance électrique fournie à la LED. Il est ainsi possible d'optimiser les conditions de fonctionnement, d'une part, pour la partie du système électronique formée par la batterie sélectionnée, le convertisseur de tension et l'unité de commande et, d'autre part, pour la partie de ce système électronique formée par la LED et la source de courant.

Brève description des dessins

L'invention sera décrite ci-après à l'aide de dessins annexés, donnés à titre d'exemples nullement limitatifs, dans lesquels :

- La Figure 1, déjà décrite, représente schématiquement un système électronique autonome de l'art antérieur avec une LED ;
- La Figure 2 montre schématiquement un système électronique autonome avec une LED alimentée périodiquement et un dispositif électronique selon l'invention pour alimenter cette diode ; et
- La Figure 3 donne les graphes en fonction du temps de la tension aux bornes de la capacité de stockage, de la tension aux bornes de la source de courant et du courant d'alimentation de la diode pour un agencement particulier du système électronique de la Figure 2.

Description détaillée de l'invention

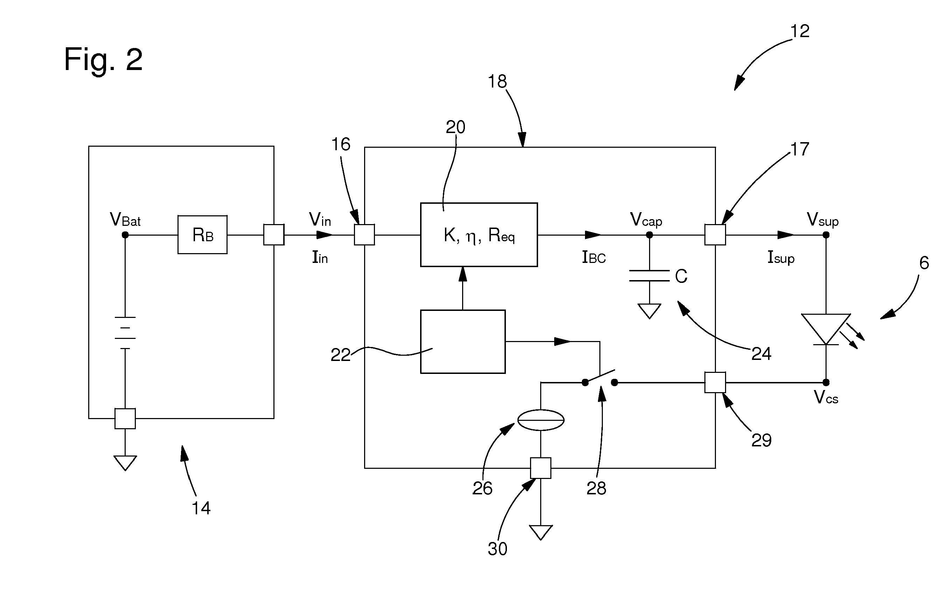

A l'aide des Figures 2 et 3, on décrira ci-après un mode de réalisation d'un dispositif électronique pour alimenter une diode électroluminescente selon l'invention. Le dispositif électronique 18 est destiné à être agencé entre une diode électroluminescente 6 et une batterie 14 formant une source d'alimentation électrique. La batterie a une tension à vide $V_{Bat}$ et une résistance interne $R_B$. Ce dispositif électronique 18, la LED 6 et la batterie 14 forment ensemble un système électronique autonome 12. Dans le cadre de l'invention, la batterie fournit une tension d'alimentation $V_{in}$, pour un courant d'alimentation $I_{in}$ égal à un courant de fonctionnement donné de la diode électroluminescente, qui est inférieure à la tension de fonctionnement correspondante de cette diode électroluminescente. Ainsi, comme dans la réalisation de la Figure 1, le dispositif électronique comprend un convertisseur de tension du type élévateur 20 (en anglais 'boost converter') qui est agencé entre une plage d'entrée 16, destinée à être reliée à la batterie 14, et une plage de sortie 17 destinée à être reliée à une première borne de la LED 6. Ce convertisseur est caractérisé par un facteur multiplicateur K, un rendement $\eta$ en phase établie et une résistance d'entrée équivalente $R_{eq}$. Selon une variante de réalisation principale, la batterie prévue a une résistance interne $R_B$ qui est supérieure à $(n/4) \cdot (V_{Bat})^2 / P_{LED}^{min}$, $\eta$ étant le rendement du dispositif électronique en régime établi du convertisseur de tension et $P_{LED}^{min}$ la puissance minimum d'activation de la diode électroluminescente.

Le dispositif électronique 18 comprend en outre une capacité de stockage d'énergie électrique 24, agencée en aval du convertisseur de tension de manière parallèle à la plage de sortie 17, une source de courant 26 et un interrupteur 28 commandé par une unité de commande 22 de ce dispositif électronique. De manière générale, la source de courant et l'interrupteur sont agencés en série entre la capacité de stockage 24 et une borne de tension inférieure 30 sur le chemin électrique prévu pour l'alimentation de la diode électroluminescente. Dans la variante représentée à la Figure 2, la source de courant et l'interrupteur sont agencés entre la borne de tension inférieure 30 et une plage de contact 29 reliée à la deuxième borne de la LED. La source de courant est prévue pour imposer lorsqu'elle est activée, c'est-à-dire lorsque l'interrupteur est fermé et donc conducteur, un courant constant $I_{CS}$ qui correspond au courant de fonctionnement $I_{sup}$ fourni à la LED par le dispositif électronique.

Selon l'invention, il est prévu alternativement des phases de charge de la capacité de stockage et des phases d'activation de la LED. Pour ce faire, l'unité de commande 22 est agencée pour commander l'interrupteur 28 de manière à le rendre alternativement non conducteur durant des premières périodes T1 et conducteur durant des deuxièmes périodes T2. A la Figure 3, la courbe 34 donne la tension $V_{cap}$ de la capacité de stockage au cours du temps. Après une période d'initialisation $T_{init}$, la LED est alimentée pendant les périodes T2 (phases d'activation), où $V_{cap}$ diminue progressivement entre une tension supérieure V1 et une tension inférieure V2 (segments 36), et elle est désactivée durant les périodes T1 (phases de charge) où la tension $V_{cap}$ remonte progressivement entre V2 et V1 (segments 38) grâce à la charge de la capacité de stockage par la batterie.

Phases d'activation de la LED

Lors d'une phase d'activation de la LED, il est important que la tension d'alimentation $V_{sup}$ fournie par le dispositif électronique à la diode reste supérieure ou égale à une tension minimum $V_{sup}^{min}$ correspondant à la somme de la tension de fonctionnement $V_{LED}$ de la LED et d'une tension minimum $V_{CS}^{min}$ d'activation de la source de courant. La tension d'alimentation étant égale à la tension fournie par la capacité de stockage $V_{cap}$ dans ce mode de réalisation, on a donc $V_{cap} = V_{sup} >= V_{LED} + V_{CS}^{min}$ sur toute la phase d'activation et notamment pour la tension d'alimentation V2 à la fin de cette phase d'activation. Comme la tension $V_{LED}$ est constante avec un courant d'alimentation constant $I_{sup} = I_{CS}$ (courbe 48 à la Figure 3), la tension $V_{CS}$ (courbe 42 à la Figure 3) entre la plage de contact 29 et la borne de tension inférieure 30 diminue pendant les phases d'activation (segments 44) jusqu'à une tension V3 prévue supérieure ou égale à $V_{CS}^{min}$.

Pour la phase d'activation, on peut distinguer deux variantes selon que le convertisseur de tension 20 reste actif ou non durant cette phase d'activation. Dans la première variante où le convertisseur de tension est inactif, on a la relation mathématique suivante :

$$\Delta V = V1 - V2 = I_{CS} \cdot T2 \, / \, C \qquad (1)$$

où V1 est la tension d'alimentation au début de la phase d'activation, T2 la durée de cette phase d'activation et C la valeur de la capacité de stockage.

On notera que le coefficient multiplicateur K est de préférence prévu pour que la tension V1 soit inférieure ou égale à $K \cdot V_{in}$ avec $V_{in}$ supérieure à la tension $V_{in}^{min}$ pour le fonctionnement du dispositif électronique 18 et correspondant à un courant d'entrée $I_{in}$ donné et régulé par ce dispositif électronique. Dans tous les cas, la tension V1 est inférieure à la tension à vide $V_{Bat}$ de la batterie multiplié par K. Dans la deuxième variante, le convertisseur 20 est actif et la batterie fournit en direct une partie du courant d'alimentation de la LED. On a alors

$$\Delta V = V1 - V2 = (I_{CS} - I_{BC}) \cdot T2 \, / \, C \qquad (2)$$

où $I_{BC}$ est le courant moyen fourni par le convertisseur de tension durant la période T2.

La relation mathématique (1) ou (2) ci-dessus lie ainsi divers paramètres du système électronique. Si la période T2 et le courant $I_{CS}$ sont donnés (et également $I_{BC}$ déterminé dans la deuxième variante), on obtient une relation entre $\Delta V$ et C, à savoir $\Delta V \cdot C$ égal à une valeur constante déterminée Q. En prenant V2 égal à $V_{sup}^{min}$, pour pouvoir fournir le courant $I_{CS}$ durant la période T2, on obtient une égalité donnant une tension supérieure minimum $V1^{min}$ pour une valeur de C donnée, à savoir: $(V1^{min} - V_{sup}^{min}) = Q/C$. On a donc une relation directe entre la capacité de stockage C et la tension supérieure minimum $V1^{min}$. D'autre part, pour une tension supérieure déterminée V1, on obtient de la relation susmentionnée une valeur minimum $C^{min}$ pour la capacité : $C^{min} = Q/(V1 - V_{sup}^{min})$. Si la valeur C est sélectionnée supérieure à $C^{min}$ dans ce dernier cas où si la valeur de V1 est sélectionnée supérieure à $V1^{min}$ dans l'autre cas, alors la valeur de V2 en fin de période d'activation est supérieure à $V_{sup}^{min}$.

En prenant par exemple une LED telle que décrite en relation avec la Figure 1, on a $V_{LED} = 3.0$ V et on prend une source de courant qui impose un courant $I_{CS} = 1.0$ mA. Ensuite, en souhaitant par exemple une période T2 = 100 ms et en sélectionnant une tension initiale V1 = 5.0 V, on obtient pour la première variante: $C^{min} \approx 55$ μF avec une tension $V_{sup}^{min} = 3.2$ V.

Phase de charge de la capacité de stockage

Dans une phase de charge de la capacité de stockage pendant laquelle la LED est désactivée (interrupteur 28 ouvert et donc non conducteur), on peut utiliser la loi de conservation de l'énergie pour déterminer la durée de charge T1 en fonction de la capacité de stockage et réciproquement. Pour simplifier le calcul, on considérera la variante préférée où premièrement le courant $I_{in}$ en entrée du dispositif électronique 18 est régulé par l'unité de commande 22 de manière à être sensiblement constant tant que la tension $V_{cap}$ aux bornes de la capacité 24 est inférieure ou égale à la tension d'entrée correspondante $V_{in}$ multipliée par le facteur multiplicateur K du convertisseur de tension, et où deuxièmement il est prévu que la tension supérieure prévue V1 soit inférieure ou égale à $K \cdot V_{in}$. On notera que la tension $V_{in}$ est prévue supérieure à la tension minimum $V_{in}^{min}$ de fonctionnement du dispositif électronique 18.

L'augmentation d'énergie dans la capacité de stockage 24 est donnée par $\Delta E = C \cdot (V1^2 - V2^2)/2$. Cette différence d'énergie est fournie par la batterie via le convertisseur de tension, ce dernier étant dans une phase de transition puisque la tension initiale V2 est généralement inférieure à $K \cdot V_{in}$. Durant la période T1, on peut définir un rendement moyen $\eta^*$ du dispositif électronique, lequel est généralement inférieur au rendement $\eta$ en phase établie. Dans le cadre de la variante préférée susmentionnée, l'énergie fournie à la capacité est définie par $\Delta E = \eta^* \cdot V_{in} \cdot I_{in} \cdot T1$. On obtient donc la relation mathématique suivante :

$$C = 2\eta^* \cdot V_{in} \cdot I_{in} \cdot T1 / (V1^2 - V2^2) \qquad (3)$$

Si on reprend les valeurs de l'exemple considéré pour la phase d'activation et un rendement $n^* = 0.6$ (60%), une tension $V_{in} = 1.0$ V et la batterie utilisée dans les exemples numériques précédents ($V_{Bat} = 1.5$ V et $R_B = 300\ \Omega$), on obtient un courant $I_{in} = 1.66$ mA. Ensuite, en prenant une période $T1^{max} = 900$ ms, on obtient de la relation mathématique (3) une valeur maximale pour la capacité de stockage $C^{max} = \sim 120\ \mu F$.

Dans l'exemple numérique donné, on remarque donc que, pour T1=100 ms et T2=900 ms, soit T1+T2=1.0 s (une seconde), la capacité de stockage a une valeur qui peut être comprise entre deux valeurs extrêmes définie d'une part par la phase d'activation et d'autre part par la phase de charge : $55\ \mu F < C < 120\ \mu F$. On a donc une certaine liberté dans le choix de la capacité de stockage en fonction de l'application souhaitée. Ainsi, pour diminuer la durée de la période de charge T1, on prendra C inférieure à mais proche de $120\ \mu F$. Par contre, si on souhaite diminuer la consommation d'énergie et ainsi augmenter la longévité de la batterie, on prendra C supérieure à mais proche de $55\ \mu F$ pour diminuer l'énergie dissipée par la batterie. En prenant par exemple $C = 60\ \mu F$, la puissance d'entrée nécessaire est $P_{in} = 0.82$ mW. La tension d'entrée, correspondant à la tension délivrée par la batterie, vaut alors Vin $\approx 1.3$ V et le courant correspondant $I_{in} = 0.63$ mA. On peut donc agencer le dispositif électronique pour que le courant tiré de la batterie soit régulé à $I_{in} = 0.65$ mA ou, en tenant compte de pertes résiduelles non considérées dans les calculs, par exemple $I_{in} = 0.70$ mA. On remarquera qu'avec Vin = 1.25 V, on peut avoir pour le convertisseur de tension un coefficient multiplicateur K=4, au lieu de K=5 avec Vin = 1.0 V. D'autre part, il est aussi possible de sélectionner une capacité C plus élevée, par exemple $C \approx 150\ \mu F$, et de diminuer la tension supérieure V1 sélectionnée, notamment à V1=3.9 V. Dans ce dernier cas, il est alors possible de diminuer encore le coefficient multiplicateur et choisir un tripleur de tension.

Ainsi, selon l'invention, la valeur C de la capacité de stockage, la tension supérieure V1 et les première et deuxième périodes T1 et T2, pour une LED et une batterie données et pour les éléments du dispositif électronique autres que la capacité de stockage, sont sélectionnées de sorte que, d'une part, la tension aux bornes de la capacité de stockage lors de chaque période d'activation reste supérieure ou égale à une tension d'alimentation minimum $V_{sup}^{min}$, égale à la somme de la tension de fonctionnement $V_{LED}$ de la diode électroluminescente et d'une tension minimum d'activation $V_{CS}^{min}$ de la source de courant, et que, d'autre part, la tension aux bornes de la capacité de stockage en fin de chaque période de charge soit au moins égale à la tension supérieure V1. Le convertisseur de tension est sélectionné avec un facteur multiplicateur permettant d'atteindre au moins cette tension supérieure aux bornes de la capacité de stockage pour la batterie prévue.

Finalement, comme indiqué précédemment, selon une variante préférée du dispositif électronique, l'unité de commande 22 est agencée pour régler le courant d'alimentation $I_{in}$ fourni par la batterie à ce dispositif électronique de manière que la tension d'alimentation $V_{in}$ de cette batterie reste supérieure à une tension d'alimentation minimale $V_{in}^{min}$ du dispositif électronique.

**Revendications**

1. Dispositif électronique (18) pour alimenter une diode électroluminescente (6) et destiné à être agencée entre cette diode électroluminescente et une batterie (14) formant une source d'alimentation électrique, ce dispositif électronique comprenant un convertisseur de tension du type élévateur (20) agencé entre une borne d'entrée (16) destinée à être reliée à la batterie et une borne de sortie (17) destinée à être reliée à la diode électroluminescente; **caractérisé en ce que** le dispositif électronique comprend en outre une capacité de stockage d'énergie électrique (25;C), agencée en aval du convertisseur de tension de manière parallèle à ladite borne de sortie, une source de courant (26) et un interrupteur (28) commandé par une unité de commande (22) de ce dispositif électronique, cette source de courant et cet interrupteur étant agencés en série, entre ladite capacité de stockage et une borne de tension inférieure, sur le chemin électrique prévu pour l'alimentation de la diode électroluminescente, **en ce que** la source de courant est agencée pour imposer, lorsqu'elle est activée, un courant sensiblement constant correspondant au courant de fonctionnement ($I_{sup}$) prévu pour la diode électroluminescente, et **en ce que** l'unité de commande est agencée pour commander ledit interrupteur de manière à le rendre alternativement non conducteur durant des premières périodes (T1) et conducteur durant des deuxièmes périodes (T2) ; la valeur de la capacité de stockage, une tension supérieure aux bornes de cette capacité de stockage en début de chaque deuxième période et les première et deuxième périodes étant sélectionnées de sorte que, d'une part, la tension aux bornes de la capacité de stockage lors de chaque deuxième période reste supérieure ou égale à une tension d'alimentation minimum ($V_{sup}^{min}$), égale à la somme de la tension de fonctionnement de la diode électroluminescente pour ledit courant de fonctionnement et d'une tension minimum d'activation de la source de courant, et que, d'autre part, la tension aux bornes de la capacité de stockage en fin de chaque première période soit au moins égale à ladite tension supérieure, le convertisseur de tension étant sélectionné avec un facteur multiplicateur permettant d'atteindre au moins cette tension supérieure aux bornes de la capacité de stockage pour ladite batterie.

2. Dispositif électronique selon la revendication 1, **caractérisé en ce que** l'unité de commande (22) est agencée pour régler le courant d'alimentation ($I_{in}$) fourni par la batterie à ce dispositif électronique de manière que la tension d'alimentation ($V_{in}$) de cette batterie reste supérieure à une tension d'alimentation minimale du dispositif électronique.

3. Dispositif électronique selon la revendication 1 ou 2, **caractérisé en ce que** la batterie prévue a une résistance interne ($R_B$) qui est supérieure à $(\eta/4)\cdot(V_{Bat})^2/P_{LED}^{min}$, $\eta$ étant le rendement du dispositif électronique en régime établi du convertisseur de tension, $V_{Bat}$ la tension à vide de la batterie et $P_{LED}^{min}$ la puissance minimum d'activation de ladite diode électroluminescente.

# Fig. 1
(Art antérieur)

# Fig. 3

Fig. 2

Europäisches
Patentamt

European
Patent Office

Office européen
des brevets

**RAPPORT DE RECHERCHE EUROPEENNE**

Numéro de la demande

EP 14 15 4986

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2012/119668 A1 (SUMISAKI KATSUSHI [JP] ET AL) 17 mai 2012 (2012-05-17) * page 1; figures 2, 6 * ----- | 1-3 | INV. H05B33/08 |
| X | US 2008/024097 A1 (KOMIYA KUNIHIRO [JP]) 31 janvier 2008 (2008-01-31) * le document en entier * ----- | 1-3 | |
| A | DE 10 2005 030123 A1 (AUSTRIAMICROSYSTEMS AG [AT]) 4 janvier 2007 (2007-01-04) * le document en entier * ----- | 1-3 | |

DOMAINES TECHNIQUES
RECHERCHES (IPC)

H05B

Le présent rapport a été établi pour toutes les revendications

| Lieu de la recherche | Date d'achèvement de la recherche | Examinateur |
|---|---|---|
| Munich | 20 juin 2014 | Juillot, Olivier J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 14 15 4986

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

20-06-2014

| Document brevet cité au rapport de recherche | Date de publication | Membre(s) de la famille de brevet(s) | Date de publication |
|---|---|---|---|
| US 2012119668 A1 | 17-05-2012 | CN 102474946 A<br>US 2012119668 A1<br>WO 2011016216 A1 | 23-05-2012<br>17-05-2012<br>10-02-2011 |
| US 2008024097 A1 | 31-01-2008 | CN 101114793 A<br>JP 4912067 B2<br>JP 2008035594 A<br>US 2008024097 A1 | 30-01-2008<br>04-04-2012<br>14-02-2008<br>31-01-2008 |
| DE 102005030123 A1 | 04-01-2007 | DE 102005030123 A1<br>EP 1897200 A2<br>US 2009167260 A1<br>WO 2007000272 A2 | 04-01-2007<br>12-03-2008<br>02-07-2009<br>04-01-2007 |

EPO FORM P0460